# EUROPÄISCHE PATENTSCHRIFT

(11) **EP 1 760 747 B1**
(45) Veröffentlichungstag und Bekanntmachung des Hinweises auf die Patenterteilung: **21.04.2010**
(21) Anmeldenummer: 06015650.2
(22) Anmeldetag: 27.07.2006
(51) Int. Cl.: H01H 71/40, H01H 71/14

(54) **Elektrisches Schaltgerät**
Electric circuit breaker
Disjoncteur électrique

(30) Priorität: 31.08.2005 DE 102005041232
(43) Veröffentlichungstag der Anmeldung: 07.03.2007
(73) Patentinhaber: ABB AG, 68309 Mannheim (DE)
(72) Erfinder: Christmann, Jürgen, 69245 Bammental (DE); Weber, Ralf, Dipl.-Ing., 69123 Heidelberg (DE)

(56) Entgegenhaltungen:
- EP-A1- 0 710 973
- DD-A5- 119 907
- DE-A1- 2 933 767
- DE-C- 535 664
- GB-A- 2 176 659

## Beschreibung

Die Erfindung betrifft ein elektrisches Schaltgerät gemäß dem Oberbegriff des Anspruches 1.

Insbesondere betrifft die Erfindung einen Leitungsschutzschalter, der zum Abschalten von Verbrauchern bei einem Kurzschluss- oder Überstrom verwendet wird. Die Erfindung kann natürlich auch angewendet werden bei Motorschutzschaltern und bei Fehlerstromschutzschaltern.

Ein Leitungsschutzschalter, siehe z.B. EP 0 710 973 A, besitzt in seinem Inneren einen elektromagnetischen Auslöser, der einen Tauchankerelektromagneten aufweist, mit einem Kern und einem beweglichen Anker, um die herum eine Spule gewickelt ist. Im Falle eines Kurzschlusses bewegt sich der Anker und schlägt einerseits den Kontakthebel auf, damit die Kontaktstelle schnell geöffnet wird; andererseits bewirkt er auch über ein Schaltschloss eine bleibende Öffnung der Kontaktstelle. Der thermische Auslöser, der meist als Bimetallauslöser ausgebildet ist, wirkt auf das Schaltschloss ausschließlich zur bleibenden Öffnung der Kontaktstelle. Das Bimetall ist meist als Streifen ausgebildet, der sich aufgrund der unterschiedlichen Ausdehnungskoeffizienten der miteinander verbundenen Metalle ausbiegt. Anstatt eines Thermobimetalls kann natürlich auch ein Streifen aus einer Formgedächtnislegierung verwendet werden.

Bei dem Schalter S2 der Firma ABB Stotz Kontakt GmbH, Heidelberg, ist das Schaltschloss zwischen zwei Platinen gelagert, die miteinander verbunden sind und die auch die Lagerstelle für die entsprechenden, die Verklinkungsstelle bildenden Komponentenbilden bzw. aufnehmen. Bei diesem Schalter befindet sich der elektromagnetische Auslöser zwischen dem Thermobimetall und dem Kontakthebel.

Aufgabe der Erfindung ist es, einen Schalter der eingangs genannten Art noch weiter zu verbessern, insbesondere die Montage erheblich zu vereinfachen und die Bewegungsabfolge der Komponenten des Schaltschlosses zu verbessern.

Diese Aufgabe wird erfindungsgemäß gelöst durch die Merkmale des Anspruches 1.

Erfindungsgemäß also befindet sich der als Kontakthebel ausgebildete Kontaktträger mittels einer Lasche und einem Kupplungselement mit einem Schaltgriff gekoppelt zwischen dem thermischen und dem elektromagnetischen Auslöser; der Klinkenhebel bildet mit einem drehbar gelagerten, mit dem elektromagnetischen Auslöser zusammenwirkenden Auslösehebel die Verklinkungsstelle, wobei der thermische Auslöser mittels einer den Kontaktträger übergreifenden Stange mit dem Auslösehebel gekuppelt ist, so dass sowohl der thermische als auch der elektromagnetische Auslöser bei einem Über- und/oder Kurzschlussstrom über den Auslösehebel die Verklinkungsstelle öffnen.

Durch die erfindungsgemäße Ausgestaltung wird die Abstimmung zwischen Entklinkung und Aufschlagen des Kontakthebels vor dem Aufschlagen des Kontakthebels erheblich verbessert, weil die Toleranzkette gegenüber dem oben erwähnten Schalter S2 erheblich verkürzt ist. Der Schlagstift trifft auf den Auslösehebel und dieser bewegt sich bis zur Entklinkung und trifft dort auf den beweglichen Kontakthebel zu dessen Öffnung.

Eine vorteilhafte Ausgestaltung der Erfindung kann dahingehen, dass der Auslösehebel zwischen der Drehachse des Schaltgriffes und dem elektromagnetischen Auslöser drehbar gelagert ist, wobei der Auslösehebel als Doppelarmhebel ausgebildet ist, dessen erster Arm zusammen mit dem Klinkenhebel die Verklinkungsstelle bildet und dessen zweiter Arm mit dem thermischen Auslöser und dem elektromagnetischen Auslöser zusammenwirkt.

Gemäß einer weiteren Ausgestaltung der Erfindung verläuft der erste Hebelarm des Auslösehebels in der Einschaltstellung etwa senkrecht zur Frontwand des Schaltgerätes oder etwa senkrecht zur Mittelachse des elektromagnetischen Auslösers, wogegen der zweite Hebelarm einen ersten, senkrecht zum ersten Arm verlaufenden Abschnitt und einen daran anschließenden zweiten Abschnitt aufweist, der den Schlagstift des elektromagnetischen Auslösers überdeckt.

Gemäß einer vorteilhaften Ausgestaltung der Erfindung befindet sich die Drehachse des Auslösehebels ortsfest auf einer Linie, die durch die Lagerstellen des Auslösehebels und des Schaltgriffes gebildet ist, wobei diese Linie etwa senkrecht zur Befestigungsebene bzw. zur Frontwand verläuft.

Gemäß einer weiteren Ausgestaltung der Erfindung ist eine Federanordnung vorgesehen, die den Auslösehebel dauernd so beaufschlagt, dass er den Schlaganker des Elektromagnetsystems bei Beendigung einer Auslösung in seiner auslösebereite Stellung verbringt, wodurch die Verklinkungsstelle wieder verklinkt wird und das Schaltgerät wieder eingeschaltet werden kann.

Anhand der Zeichnung, in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Teileinsicht in ein Schaltgerät, in Ausschaltstellung,
- Fig. 2: eine der Fig. 1 entsprechende Teilansicht, in Einschaltstellung,
- Fig. 3 und 4: eine Ansicht, die der in den Figuren 1 und 2 dargestellten Ansicht des Schaltgerätes bei Beginn der Auslösung und beim Ende der Auslösung entspricht.

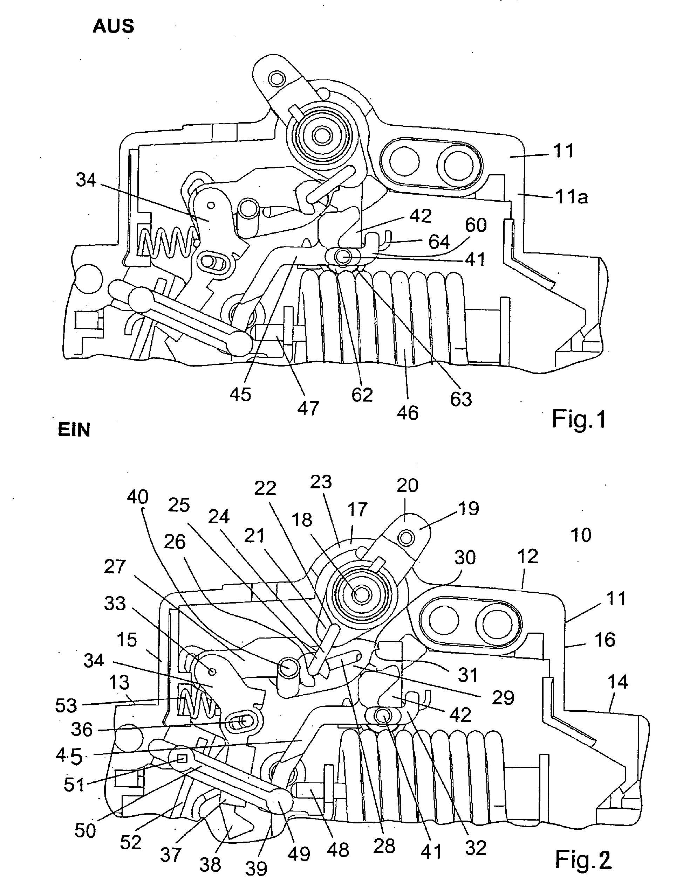

Es sei Bezug genommen auf die Fig. 2.

Ein Leitungsschutzschalter 10, der dort im Bereich seines Schaltwerkes teilweise zu sehen ist, besitzt ein Gehäuse 11, welches aus einem schalenförmigen Gehäuseunterteil und einem schalenförmigen Gehäuseoberteil zusammengesetzt ist. In der Ansicht gemäß den Figuren 1 bis 4 ist nur das Gehäuseunterteil zu sehen.

Das Gehäuse ist in Sockelbauweise aufgebaut und besitzt eine vordere Frontwand 12, zwei hintere Frontwände 13 und 14, die nicht vollständig in der Zeichnung dargestellt sind, zwei vordere Schmalseitenwände 15 und 16, die die vordere Frontwand 12 mit den hinteren Frontwänden verbinden; parallel zu der vorderen Frontwand bzw. den hinteren Frontwände 13, 14 befindet sich eine nach unten hin das Gehäuse abschließende Befestigungswand, die in den Figuren 1 bis 4 nicht dargestellt ist und die auch für die Erfindung nicht von Bedeutung ist.

Die vordere Frontwand 12 besitzt eine etwa halbkreisförmige Ausbeulung 17, in deren Bereich an einem Lager 18 ein Schaltknebel 19 gelagert ist. Der Schaltknebel 19 ist ein Doppelarmhebel mit einem Schaltgriff 20 und einem im Inneren des Schaltgerätes befindlichen augenförmigen Fortsatz 21; in dem augenförmigen Fortsatz 21 ist eine Durchgangsöffnung 22 eingebracht; der Mittelpunkt der Durchgangsöffnung 22, der Mittelpunkt des Lagers 18 und die Mittellinie des Schaltgriffes 20 liegen auf einer Linie bzw. fluchten miteinander.

Der Schaltgriff 20 ragt aus einer Öffnung 23 in der Ausbeulung oder Vorwölbung 17 heraus.

In der Durchgangsöffnung 22 ist ein Schenkel (nicht dargestellt) eines Bügels 24 eingesetzt, der eine U-Form hat, wobei der Steg 25 des Bügels in den Figuren 1 bis 4 sichtbar ist. Der andere Schenkel des U-förmigen Bügels 24 greift in eine Durchbrechung 26 einer Lasche 27 sowie in ein Langloch 28 eines Klinkenhebels 29 ein und wird darin geführt. Der Klinkenhebel 29 besitzt eine Rastnase 30, die mit einem Rücksprung 31 an einem Schlaghebel 32 eine Verklinkung bildet. Die Verklinkungsstelle wird demgemäß im Folgenden mit den Bezugsziffern 30/31 bezeichnet. Das andere Ende der Lasche 27 ist mittels einer Gelenkachse 33 mit einem Kontakthebel 34 gelenkig verbunden, der etwa mittig ein Langloch 35 aufweist, mit dem er an einem ortsfesten Zapfen 36 drehbar im Gehäuse 11 gelagert ist. Dadurch wird der Kontakthebel 35 ein Doppelarmhebel, dessen der Lagerstelle 33 entgegengesetzt liegender Hebel 37 das so genannte bewegliche Kontaktstück 38 trägt, welches mit einem feststehenden Kontaktstück 39 zusammenwirkt. Der Klinkenhebel 29 ist an seinem der Verklinkungsstelle 30, 31 entgegengesetzt liegenden Ende über eine Zapfenanordnung 40 in dem Gehäuse (sowohl im Gehäuseunterteil als auch im Gehäuseoberteil) drehbar gelagert.

Die Anordnung ist dabei so getroffen, dass die Lasche 27 und der Klinkenhebel 29 etwa in einer Linie liegen. In der Einschaltstellung, in der sich die Nase 30 an den Rücksprung 31 anlegt, befindet sich das Schaltschloss in der Einschaltstellung, wenn also das bewegliche Kontaktstück 38 das feststehende Kontaktstück 39 berührt in einer ersten stabilen Lage, bei der die Mittelachse des Schenkels 25 seitlich, in der Ausführung gemäß Fig. 2 links, neben der Mittelachse der Lagerung bzw. des Drehlagers 18 des Schaltknebels 19 vorbeigeht, so dass die Mittelachse des Schenkels 25 mit der durch die Mittelachse der Öffnung 22 und die Mittelachse der Lagerung 18 gebildeten Linie einen stumpfen Winkel einnimmt, der in Richtung der Verklinkungsstelle 30/31 geöffnet ist. Die Lasche 27 und der Klinkenhebel 29 liegen etwa parallel zu der vorderen Frontwand. In der Einschaltstellung drückt der Bügel 24 die Lasche von der Verklinkungsstelle 30/31 weg, so dass die dadurch entstehende Kraft die Einschaltkraft bewirkt. Das Langloch 35 legt sich mit seinem Ende, welches auf der Seite des Kontakthebels 34, auf der sich das bewegliche Kontaktstück befindet, an. Das Langloch 35 verläuft etwa senkrecht zur Längserstreckung des Kontakthebels 34.

Der Schlaghebel oder Auslösehebel 32 ist unterhalb des Schaltgriffes bzw. dessen Lagerstelle bei 18 um eine ortsfeste Achse 41 schwenkbar. Er besitzt einen ersten Hebelarm 42, an dem der Rücksprung 31 angeformt ist; in der Einschaltstellung verläuft dieser erste Hebelarm 42 senkrecht oder etwa senkrecht zur Frontwand. Der Schlaghebel 32 besitzt weiterhin einen zweiten Hebelarm 43, der einen ersten Abschnitt 44 und einen zweiten Abschnitt 45 aufweist, der an dem ersten Abschnitt 44 anschließt und etwa zur Befestigungsseite hin, also von der Frontseite 12 weg, vorspringt.

Das Schaltgerät besitzt einen elektromagnetischen Auslöser 46, dessen Schlaganker 47 parallel zur Frontwand bzw. zur Befestigungswand verläuft und dessen aus dem Auslöser 46 herausragendes Ende 48 von dem Abschnitt 45 überdeckt wird.

An dem freien Ende des Abschnittes 45 ist ein Ende 49 einer Verbindungsstange 50 angeschlossen, hierbei angelenkt, die mittels eines Zapfens 51 oder einer Nase 51, die senkrecht zur Zeichenebene in diese hineinragt und daher nur strichliert dargestellt ist, hinter einen Thermobimetallstreifen 52, der der thermische Auslöser ist, greift. Damit befindet sich der thermische Auslöser 52 zwischen der Nase 51 und dem Abschnitt 45.

Die Längsachse der Verbindungsstange 50 verläuft etwa senkrecht zur Längserstreckung des Thermobimetalls; in der Ausführung gemäß den Figuren 1 bis 4 bildet die Längserstreckung des Thermobimetalls 52 mit der Befestigungsseite einen spitzen Winkel, der zum elektromagnetischen Auslöser hin geöffnet ist.

Zwischen der linken Schmalseitenwand 15, also der Wand, der das Gelenk 33 benachbart liegt, und dem Kontakthebel im Bereich zwischen der Gelenkstelle 33 und dem Langloch 35 ist eine Druckfeder 53 vorgesehen, die den Kontakthebel im Uhrzeigersinn um die Lagerstelle 36 beaufschlagt, so dass die Druckfeder 53 die Ausschaltbewegung, also diejenige Bewegung des Kontakthebels 34 aus der Stellung gemäß Fig. 2 in die Stellung gemäß Fig. 1, unterstützt.

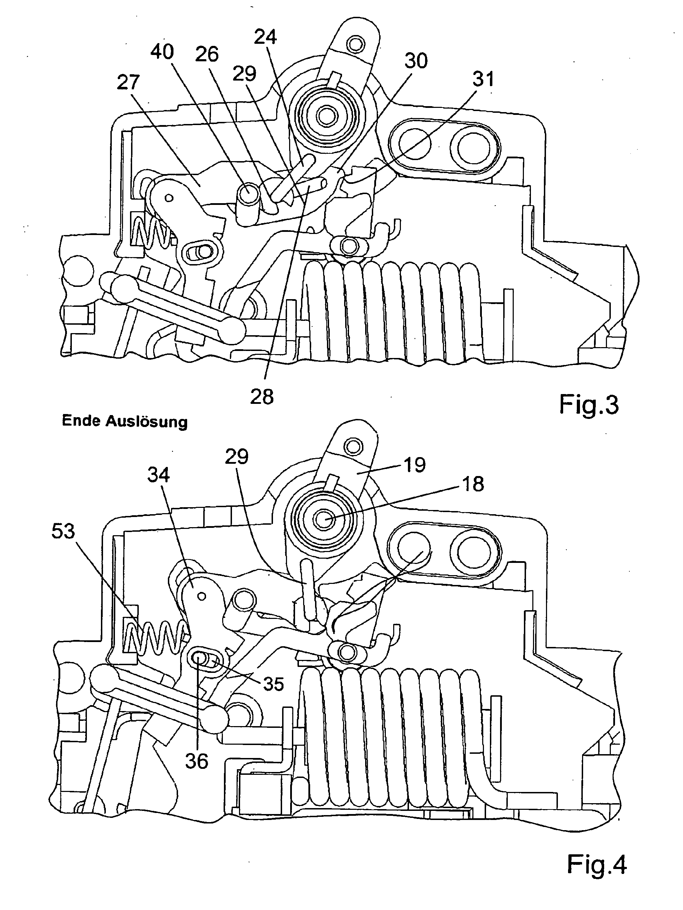

Wenn nun aufgrund eines Kurzschlussstromes der Schlaganker 48 sich in Pfeilrichtung P bewegt, drückt er auf den Abschnitt 45 und verschwenkt dabei den Schlaghebel um die Drehachse 41 im Uhrzeigersinn, wodurch die Verklinkungsstelle 30/31 entklinkt wird, siehe Fig. 3, so dass sich der Klinkenhebel 29 um seine Achse im Uhrzeigersinn verschwenken kann. Dabei gleitet der in der Öffnung 26 der Lasche 27 aufgenommene Schenkel des Bügels 24 im Langloch 28, bis er das entgegen gesetzte, (in Fig. 1 bis 4) linke Ende des Langloches 28 erreicht hat. Dadurch wird die Kraft der Feder 53 freigegeben; das Ende des Langloches 35, das der Kontaktstelle 30, 31 entgegen gesetzt liegt, legt sich gegen den ortsfesten Zapfen 36, so dass die Druckfeder 53 den Kontakthebel 34 ebenfalls entgegen dem Uhrzeigersinn verschwenken kann; dadurch gelangt der Kontakthebel in seine Ausschaltstellung, die mit Ende der Auslösung erreicht worden ist. Der Schaltgriff oder Schaltknebel 19 ist dabei freigegeben und kann sich in die Ausschaltstellung entgegen dem Uhrzeigersinn um die Achse 18 verdrehen. Dabei gibt der Bügel 24 frei bzw. zieht ihn in die in der Fig. 1 dargestellte Ausschaltstellung, in der er mit seiner Nase 30 wieder hinter den Rücksprung 31 des Schlaghebels gelangt. Nun kann eine Wiedereinschaltung des Schalters erfolgen, indem der Schaltgriff 19 aus seiner Ausschaltstellung im Uhrzeigersinn in die in der Fig. 1 dargestellte Einschaltstellung verbracht wird.

Wenn sich bei einem Überstrom der thermische Auslöser 52 verbiegt, dann verbiegt sich das freie Ende etwa in Pfeilrichtung P und nimmt dabei über die Stange oder Verbindungsstange 15 den Abschnitt 45 des Schlaghebels mit, wodurch sich der Rücksprung 3.1 von der Nase 30 entfernt und dadurch die Verklinkungsstelle geöffnet wird. Der Beginn der Auslösung ist wieder in der Fig. 3 dargestellt; der weitere Ablauf ist der gleiche wie der oben beschriebene.

Selbstverständlich kann das anhand eines Leitungsschutzschalters beschriebene Schaltschloss auch bei einem Fehlerstromschutzschalter verwendet werden; hierbei wäre anstatt des elektromagnetischen Auslösers 46, der auf Kurzschlussstrom reagiert, ein Auslöser zu verwenden, der auf einen Fehlerstrom reagiert.

Es besteht selbstverständlich auch die Möglichkeit, das Schaltschloss für einen Motorschutzschalter einzusetzen, bei dem anstatt eines Kontakthebels ein Kontaktträger vorgesehen ist, der eine Kontaktbrücke trägt, die im Einschaltzustand zwei feststehende Kontaktstücke, also ein Kontaktstückpaar, elektrisch leitend verbindet.

Es sei Bezug genommen auf die Fig. 1.

Der Abschnitt 45, der senkrecht zum ersten Arm 42 verläuft, setzt sich über seine Lagerstelle 41 hinaus fort in einen Fortsatz 60, der eine in den Figuren 1 bis 4 nicht gezeigte Abwinklung aufweist, die senkrecht zur Zeichenebene in die Zeichenebene hinein vorspringt. Um einen konzentrisch zur Lagerstelle 41 verlaufenden Vorsprung 62, der an der lnnenfläche 11a des Gehäuses 11 angeformt ist und zum Betrachter hin vorspringt, ist eine Feder 63 herumgewickelt, deren einer Arm (nicht gezeigt) ortsfest im Gehäuse festgehalten ist und deren anderer Federarm 64 federnd gegen den Fortsatz 60 drückt, so dass diese Feder den Schlaghebel oder Auslösehebel dauernd entgegen dem Uhrzeigersinn in Richtung zurückdrücken des Schlagstiftes 47 bzw. des Ankers 47 beaufschlagt. Diese Feder bewirkt, dass der Schlaghebel in seine verklinkungsbereite Stellung gedrückt wird, so dass der Klinkenhebel bei seiner Bewegung in die Ausschaltstellung, siehe oben, mit dem ersten Arm 42 des Auslösehebels die Verklinkungsstelle bildend zusammenwirkt.

## Patentansprüche

1. Elektrisches Schaltgerät, insbesondere Leitungs-, Motor- oder Fehlerstromschutzschalter, mit einem thermischen Auslöser (52), mit einem elektromagnetischen Auslöser (46), mit einem Schaltwerk mit einer Verklinkungsstelle (30, 31), mit wenigstens einer Kontaktstelle (38, 39), die mittels des Schaltwerkes bleibend geöffnet oder geschlossen wird, mit einem Schaltgriff (19), der mittels eines Kupplungselementes (24) mit einem Ende einer Lasche (27) verbunden ist, deren anderes Ende mit einem das bewegliche Kontaktstück (38) tragenden Kontaktträger (34) gekoppelt ist, und mit einem Klinkenhebel (29), der mit einem Auslösehebel (32) die Verklinkungsstelle bildet, wobei sich der Kontaktträger (34) für das bewegliche Kontaktstück (38) zwischen dem thermischen Auslöser (52) und dem elektromagnetischen Auslöser (46) befindet, dass der Klinkenhebel (29) mit einem drehbar gelagerten, mit dem elektromagnetischen Auslöser (46) und dem thermischen Auslöser (52) zusammenwirkenden Auslösehebel (32) die Verklinkungsstelle bildet, und dass der thermische Auslöser (52) mittels einer den Kontaktträger (34) übergreifenden Verbindungsstange (50) mit dem Auslösehebel (32) gekuppelt ist, so dass sowohl der thermische als auch der elektromagnetische Auslöser (52, 46) bei einem Über- und/oder Kurzschlussstrom die Verklinkungsstelle öffnen.

2. Schaltgerät nach Anspruch 1, **dadurch gekennzeichnet, dass** der Auslösehebel (32) zwischen der Drehachse (18) des Schaltgriffes (19) und dem elektromagnetischen Auslöser (46) drehbar gelagert ist, wobei der Auslösehebel (32) ein Doppelarmhebel ist, dessen erster Arm (42) zusammen mit dem Klinkenhebel (29) die Verklinkungsstelle bildet und dessen zweiter Arm (45) mit dem thermischen Auslöser (52) und dem elektromagnetischen Auslöser (46) zusammenwirkt.

3. Schaltgerät nach Anspruch 2, **dadurch gekennzeichnet, dass** der erste Hebelarm (42) des Auslösehebels (32) in Einschaltstellung senkrecht zur Frontwand (12) des Schaltgerätes oder senkrecht zur Mittelachse des elektromagnetischen Auslösers (46) verläuft, wogegen der zweite Hebelarm (43) einen ersten, senkrecht zum ersten Hebelarm (42) verlaufenden Abschnitt (45) und einen daran anschließenden zweiten Abschnitt aufweist, der den Schlagstift des elektromagnetischen Auslösers (46) überdeckt.

4. Schaltgerät nach einem der vorherigen Ansprüche, **dadurch gekennzeichnet, dass** die Drehachse (Lagerstelle) (41) des Auslösehebels (32) ortsfest sich auf einer Linie befindet, die durch die Lagerstellen (41,18) des Auslösehebels (32) und des Schaltgriffes (19) gebildet ist, wobei diese Linie etwa senkrecht zur Befestigungsebene bzw. zur Frontwand (12) verläuft.

5. Schaltgerät nach einem der vorherigen Ansprüche, **dadurch gekennzeichnet, dass** eine Federanordnung (63) vorgesehen ist, die den Auslösehebel (32) dauernd so beaufschlagt, dass er den Schlaganker (48) des elektromagnetischen Auslösers (46) bei Beendigung einer Auslösung in seine auslösebereite Stellung verbringt, wodurch die Verklinkungsstelle wieder verklinkt wird.

## Claims

1. An electric switchgear, especially a miniature circuit breaker, a motor circuit breaker or a residual-current circuit breaker, comprising a thermal release (52), an electromagnetic release (46), a switch mechanism with a latching point (30, 31), at least one contact point (38, 39) which is opened or closed permanently by means of the switch mechanism, a switch handle (19) which is connected by means of the coupling element (24) with one end of a bracket (27), the other end of which is coupled with a contact carrier (34) carrying the movable contact element (38), and a latch lever (29) which forms the latch point with a release lever (32), with the contact carrier (34) for the movable contact element (38) being disposed between the thermal release (52) and the electromagnetic release (46), the latch lever (29) forming the latch point with the electromagnetic release (46) and the release lever (32) cooperating with the thermal release (52), and the thermal release (52) being coupled with the release lever (32) by means of a connecting rod (50) overlapping the contact carrier (34), so that both the thermal as well as the electromagnetic release (52, 46) open the latch point in case of an overcurrent and/or short-circuit current.

2. A switchgear according to claim 1, **characterized in that** the release lever (32) is rotatably held between the rotational axis (18) of the switch handle (19) and the electromagnetic release (46), with the release lever (32) being a double-arm lever whose first arm (42) forms the latch point together with the latch lever (29) and whose second arm (45) cooperates with the thermal release (52) and the electromagnetic release (46).

3. A switchgear according to claim 2, **characterized in that** in the switch-on position the first lever arm (42) of the release lever (32) extends perpendicularly to the front wall (12) of the switchgear or perpendicularly to the central axis of the electromagnetic release (46), whereas the second lever arm (43) comprises a first section (45) extending perpendicularly to the first lever arm (42) and an adjacent second section which covers the striker pin of the electromagnetic release (46).

4. A switchgear according to one of the preceding claims, **characterized in that** the rotational axis (bearing point) (41) of the release lever (32) is disposed in a stationary manner on a line which is formed by the bearing points (41, 18) of the release lever (32) and the switch handle (19), with said line extending approximately perpendicularly in relation to the fastening plane or front wall (12).

5. A switchgear according to one of the preceding claims, **characterized in that** a spring arrangement (63) is provided which pressurizes the release lever (32) in a permanent manner such that upon completing a release it brings the striker armature (48) of the electromagnetic release (46) to its position ready for release, through which the latching point is latched again.

## Revendications

1. Appareil de commutation électrique, en particulier disjoncteur de protection de ligne ou de moteur ou disjoncteur de protection contre les courants de court-circuit, avec un déclencheur thermique (52), avec un déclencheur électromagnétique (46), avec un organe de commutation muni d'un point d'encliquetage (30, 31), avec au moins un point de contact (38, 39) qui peut être ouvert ou fermé de façon permanente au moyen de l'organe de commutation, avec une poignée de commutation (19) qui est reliée au moyen d'un élément de couplage (24) à une extrémité d'une patte (27) dont l'autre extrémité est couplée à un porte-contact (34) portant le contact mobile (38), et avec un levier d'encliquetage (29) qui forme le point d'encliquetage avec un levier de déclenchement (32), dans lequel le porte-contact (34) pour le contact mobile (38) se trouve entre le déclencheur thermique (52) et le déclencheur électromagnétique (46), dans lequel le levier d'encliquetage (29) forme le point d'encliquetage avec un levier de déclenchement (32) supporté avec possibilité de rotation et coopérant avec le déclencheur électromagnétique (46) et le déclencheur thermique (52), et dans lequel le déclencheur thermique (52) est couplé avec le levier de déclenchement (32) au moyen d'une tige de liaison (50) entourant le porte-contact (34), de sorte que les déclencheurs thermique et électromagnétique (52, 46) ouvrent le point d'encliquetage en cas de surintensité ou de courant de court-circuit.

2. Appareil de commutation selon la revendication 1, **caractérisé en ce que** le levier de déclenchement (32) est supporté avec possibilité de rotation entre l'axe de rotation (18) de la poignée de commutation (19) et le déclencheur électromagnétique (46), le levier de déclenchement (32) étant un levier à deux bras dont le premier bras (42) forme le point d'encliquetage avec le levier d'encliquetage (29) et dont le deuxième bras (45) coopère avec le déclencheur thermique (52) et le déclencheur électromagnétique (46).

3. Appareil de commutation selon la revendication 2, **caractérisé en ce que** le premier bras de levier (42) du levier de déclenchement (32) est perpendiculaire, dans la position d'activation, à la face avant (12) de l'appareil de commutation ou perpendiculaire à l'axe médian du déclencheur électromagnétique (46), alors que le deuxième bras de levier (43) présente une première partie (45) perpendiculaire au premier bras de levier (42) et une deuxième partie faisant suite à celle-ci, qui recouvre la goupille de percuteur du déclencheur électromagnétique (46).

4. Appareil de commutation selon l'une des revendications précédentes, **caractérisé en ce que** l'axe de rotation (point d'appui) (41) du levier de déclenchement (32) est fixe sur une ligne formée par les points d'appui (41, 18) du levier de déclenchement (32) et de la poignée de commutation (19), laquelle ligne est approximativement perpendiculaire au plan de fixation ou à la face avant (12).

5. Appareil de commutation selon l'une des revendications précédentes, **caractérisé en ce qu'**il est prévu un dispositif de ressort (63) qui contraint en permanence le levier de déclenchement (32) de telle façon qu'il amène l'induit de percuteur (48) du déclencheur électromagnétique (46) dans une position prête à déclencher lorsqu'un déclenchement se termine, de sorte que le point d'encliquetage est à nouveau encliqueté.
